# EUROPEAN PATENT APPLICATION

(11) **EP 1 593 435 A1**
(43) Date of publication of application: **09.11.2005**
(21) Application number: 04425302.9
(22) Date of filing: 30.04.2004
(51) Int. Cl.: B02C 4/42, F16H 37/04, F16H 1/00

(54) **Reduction device for transmitting motion to tools of a crushing machine and crushing machine incorporating said device**

(71) Applicant: Bondioli, Edi, I-46029 Suzzara, Mantova (IT)
(72) Inventor: Bondioli, Edi, I-46029 Suzzara, Mantova (IT)
(74) Representative: Mannucci, Michele

(57) **Abstract**

Disclosed is a reduction device (51) for transmitting motion to a crusher, with a first and a second driven shaft (53, 55) parallel with each other and which can be coupled to crushing tools (U1, U2) of the crusher. The device comprises an arrangement of reduction stages (67; 79; 89) in series with one another, between a coupling interface (69A, 69B) with one or more motors (MA; MB; MC; MD) and the driven shafts of the device. The output of the last stage of the series of reduction stages is coupled to a first driven shaft, to transmit thereto the necessary torque supplied by the motor or motors interfaced with the input of the first reduction stage. The second driven shaft receives torque through a transmission (101, 103) from the output of the last reduction stage.

## Description

### Technical field

The present invention relates to a reduction device for transmitting motion to the shafts of a crushing machine, that is, of a machine designed to crush various types of materials.

The invention also relates to a crushing machine which incorporates a transmission and reduction device of the aforesaid type.

### State of the art

To crush various types of materials, such as blocks of concrete, the chassis of motor vehicles, blocks or structures in wood and other materials also of large dimensions, crushing machines equipped with a pair of crushing tools are currently used. Each tool comprises a shaft on which disks or other crushing members are mounted. The two shafts, parallel to each other, rotate in opposite directions and the material to be crushed is fed into the space therebetween.

To transmit the necessary torque to the shafts of the crushing machine, reduction units or devices with two parallel output shafts, to which the shafts or tools of the crushing machine are connected, are currently used. Each of the output shafts, that is, of the driven shafts, of the reduction device is operated by a succession of reducers or reduction stages in series. The power is normally supplied by two parallel motors, typically hydraulic motors, each of which rotates the input shaft of the first reducer or reduction stage of the series of reducers or reduction stages connected to each output shaft. In practice, two or three reduction stages are provided between the motor and the respective output shaft, each comprising a planetary gear unit. This arrangement allows a reduction ratio of around 100:1 to be obtained, thereby allowing sufficient torque to be obtained on the shafts of the crushing machine.

To guarantee synchronism of rotation between the two driven shafts of the reduction device, two gear wheels with the same diameter, meshing with each other, are keyed onto said shafts. The function of these wheels is not to transmit torque and thereby power, but essentially only to maintain the angular phase between the two shafts.

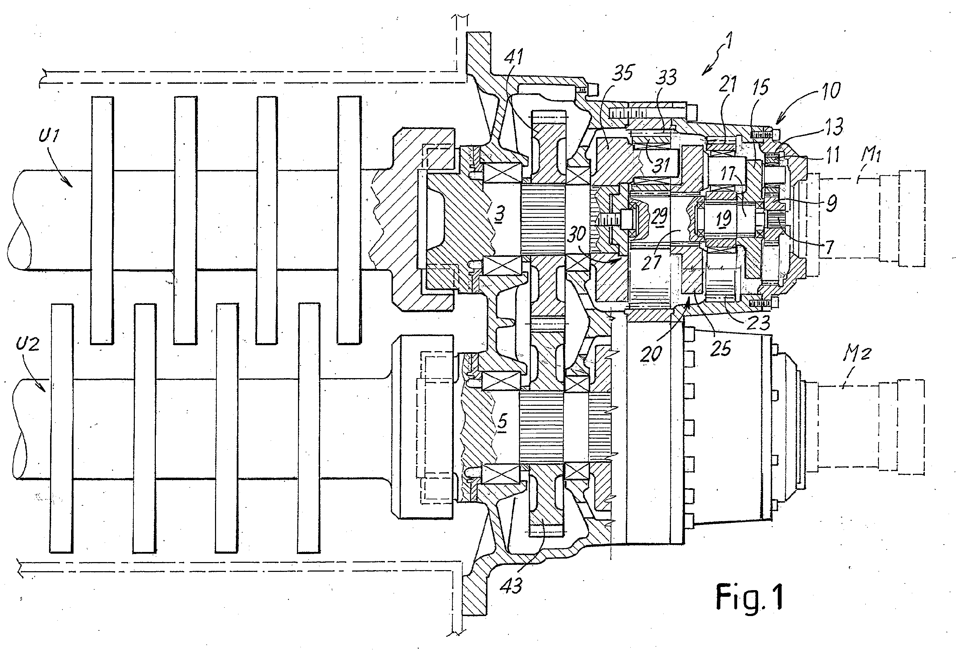

An example of a traditional device of this type is shown in Figure 1 and indicated therein as a whole with 1. The numerals 3 and 5 indicate the two driven shafts, or output shafts, of the device 1, with which two crushing tools U1, U2 of the crusher are associated. Power is supplied to the driven shaft 3 by a first power source, represented by a motor M1, for example a hydraulic motor. The output shaft 7 of the motor M1 carries in rotation a gear 9 constituting a moving element, that is input element, of a first reducer, or reduction stage, with planetary gear train indicated as a whole with 10. The gear 9 transmits motion to one or more planets, that is, gear wheels the axes of which rotate about the axis of the shaft 7. One of said planets is indicated in Figure 1 with 11. It rolls on an external ring gear 13 and its axis is carried by a train carrier or planet carrier 15. This constitutes the output element of the planetary gear unit.

Associated with the planet carrier 15, through a splined coupling, is a shaft 17, integral with a gear 19, constituting the moving element of a second reducer, or reduction stage, with planetary gear train indicated with 20, disposed in series with the reducer or reduction stage 10. Of this reducer, 21 indicates the planet, 23 indicates the ring gear on which the planet or planets 21 roll, and 25 indicates the planet carrier.

In series with the second reducer or reduction stage with planetary gear train a third reducer, or reduction stage, with planetary gear train indicated with 30, is disposed, and which receives its motion from a shaft 27 coupled with a splined coupling to the planet carrier 25 and from a sun gear 29. This supplies movement to one or more planets 31, which roll on a ring gear 33 and are carried by axles integral with a planet carrier 35.

The planet carrier 35 constitutes the output element of the third reducer with planetary gear train and transmits movement to the first driven shaft 3 through a splined shaft coupling.

The driven shaft 5 is operated by a second motor M2 with a series of three reduction stages with planetary gear train analogous to the one described with reference to the shaft 3 and not shown in the drawing.

Synchronism between the driven shafts 3 and 5 and therefore between the tools U1 and U2 is maintained through a pair of gears 41, 43, keyed respectively on the shaft 3 and on the shaft 5. The task of these gears is not to transmit power to the driven shafts, but only to maintain them in synchronism if the motors M1 and M2 are not controlled with sufficient accuracy.

The torque available on the crushing tools cannot be increased without this having implications on the design of the device. In fact, the increase in torque requires on the one hand modification of the motorization and on the other oversizing of the mechanical members to transmit movement. Moreover, the distance between centers of the tools of the crushing machine cannot be modified. Therefore, the problem arises of how to increase the power of the motion sources and consequently the stress on the mechanical members without exceeding the overall dimensions compatible with the predetermined distance between centers of the crushing machine tools.

In addition to the aforesaid drawbacks, known devices are characterized by their considerably complex nature, due to the large number of components, with consequent high production costs.

### Objects and summary of the invention

According to a first aspect, the object of the invention is to produce a device to reduce and transmit motion to the tools of a crushing machine, which overcomes or reduces the aforesaid problems.

Essentially, to obtain this object a reduction device with two output driven shafts, essentially parallel with each other, is provided, comprising a first reduction stage with at least one input shaft which can be coupled to a power source; a further reduction stage disposed downstream of the first reduction stage and comprising a planetary gear train. Moreover, in the device according to the invention the output of the further reduction stage (which is the last stage of a series which may comprise two or more reduction stages) is torsionally coupled to the first driven shaft; and between the output of the last reduction stage and the second driven shaft a power transmission is disposed, so that the second driven shaft receives the transmission torque through the various reduction stages in series.

In other terms, according to the invention the transmission of motion to the pair of driven shafts is obtained by a single arrangement of reducers or reduction stages in series with one another, between a coupling interface with one or more motors and the driven shafts of the device. The output of the last reduction stage of the series of reducers or reduction stages supplies power to both the driven shafts through coupling one of the driven shafts to the output of the last reduction stage and transmission from said output to the second driven shaft.

According to a particular aspect, the invention relates to a reduction device for the transmission of motion to a crusher, with a first and a second driven shaft, parallel to each other and which can be coupled to crushing tools, comprising a first reduction stage with at least an input shaft which can be coupled to at least one power source, and a second reduction stage disposed, directly or indirectly, downstream of said first reduction stage. Characteristically, the output of the second reduction stage is torsionally coupled to the first driven shaft; moreover, a power transmission is disposed between the output of the second reduction stage and the second driven shaft, so that the second driven shaft receives torque through the first and the second reduction stage (and any further reduction stages interposed in series between the first and the second stage) and said power transmission.

Contrary to what occurs in traditional devices, therefore, a single power path is provided through a cascade of reduction stages disposed in series with one another between one or more power sources and one of the driven shafts, while the second driven shaft receives motion from a power transmission in series with respect to said reduction stages, directly from the power source or sources that supply motion to the cascade of reduction stages. Advantageously, as can be seen in greater detail with reference to the drawings of one embodiment of the invention, the transmission that supplies torque to the second driven shaft is constituted by a pair of gear wheels corresponding to the gear wheels found in traditional reducers. Nonetheless, while in the devices of the type shown in Figure 1 the function of these wheels is exclusively to maintain the angular phase between the two driven shafts, in the device according to the invention they also transmit torque and power from the output of the series of reduction stages to the second driven shaft. Therefore, the introduction of additional components with respect to traditional solutions can be avoided, and in fact the total number of these components may be reduced, as there is no second series of reduction stages.

With the configuration according to the invention the dimension of the members of the kinematic chain between the power source or sources and the driven shafts may be increased without the need to increase the distance between the centers of the driven shafts. This provides a greater input power and thereby a greater torque on the driven shafts without altering the configuration of the crusher and its tools. The input power may even be doubled without altering the distance between centers of the driven shafts, thereby maintaining the configuration of the crushing machine.

Moreover, and irrespective of the need to maintain a specific distance between centers of the crushing tools also increasing the available torque, the configuration according to the invention makes substantial constructional simplification possible, with a decrease in the number of components of the device and consequently with a considerable saving in the production costs.

According to a possible and advantageous embodiment, the first reduction stage (that is, the first reduction stage between the power source or sources and the driven shafts) includes an ordinary gear train with at least an input gear torsionally coupled to the input shaft of the reduction stage and meshing with a crown gear. Ordinary gear train is intended as a gear train wherein the gear wheels meshing with one another to transmit motion are supported by axes that do not move in space, but remain in the same relative position. This distinguishes them from planetary gear trains, wherein at least one of the gears is carried by a shaft with moving axis.

In practice, the transmission of power from the output shaft of the second reduction stage towards the second driven shaft has a transmission ratio of 1:1, the two driven shafts rotating in opposite directions at the same angular velocity. This allows the crushing tools to have the same rotation speed. However, if required in particular applications, it would also be possible to obtain a different transmission ratio, with consequent different rotation speed of the two driven shafts and thereby of the two tools of the crusher. Analogously, it would also be possible to provide one or more further output driven shafts on the device.

Utilizing an ordinary input gear train, that is as the first stage of the kinematic transmission and reduction chain, it is easy to provide a plurality of input shafts, each torsionally coupled to an input gear, said input gears meshing with said crown gear, for connection to a corresponding plurality of power sources, which transfer power to said crown gear. The use of several power sources, that is, of several motors, in parallel may have many advantages, for example in terms of available power, and also in terms of operating safety, thanks to the possibility of producing a redundant system.

The use of an ordinary input gear train also allows further important advantages to be attained. Among these, it is particularly simple to modify the overall transmission ratio of the device, simply by modifying the pair or pairs of gears (that is, the input gear or the input gears and the crown gear with which it or they mesh). This may be useful, for example, when the motor utilized as power source is replaced. If it is replaced with another with greater output at a different operating speed with respect to the speed of the motor previously employed, it is easy to maintain the speed of the driven shafts, even if the running speed of the motor changes, by the aforesaid simple replacement of the pair or pairs of wheels of the ordinary input gear train.

According to the overall reduction ratio required, which is typically around 100:1, two or more reduction stages may be provided. For example, the first reduction stage with ordinary input gear train may be followed by one or two reduction stages with planetary gear train in series.

According to a further aspect, the invention relates to a crushing machine comprising a first crushing tool and a second crushing tool, rotating about parallel axes, provided with a reduction and transmission device as defined above.

### Brief description of the drawings

The invention will be better understood following the description and the accompanying drawing which shows a non-limiting practical embodiment of the invention.

In the drawing:
Figure 1, already described, represents a longitudinal section of a known device with a double series of reduction stages between a double input and two driven shafts that transmit motion to two crushing tools;
Figure 2 shows a longitudinal section of a device according to the invention with two driven shafts and respective crushing tools, to which power is supplied through a single series of reduction stages;
Figures 3 and 4 show front view according to III-III and IV-IV in Figure 2; and
Figure 5 shows a front view analogous to the view in Figure 3, in a modified embodiment.

### Detailed description of an embodiment

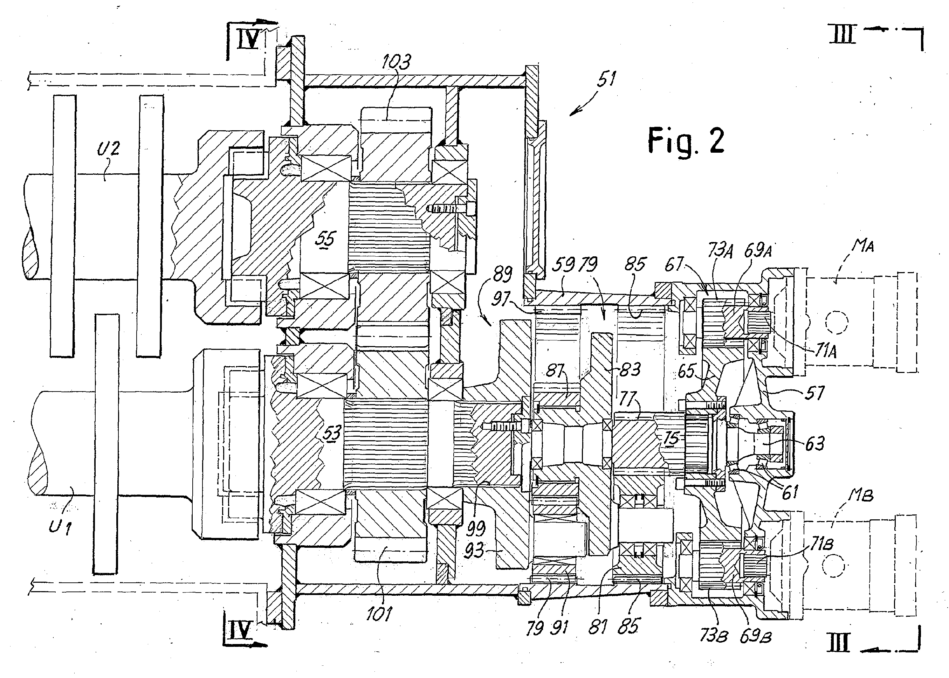

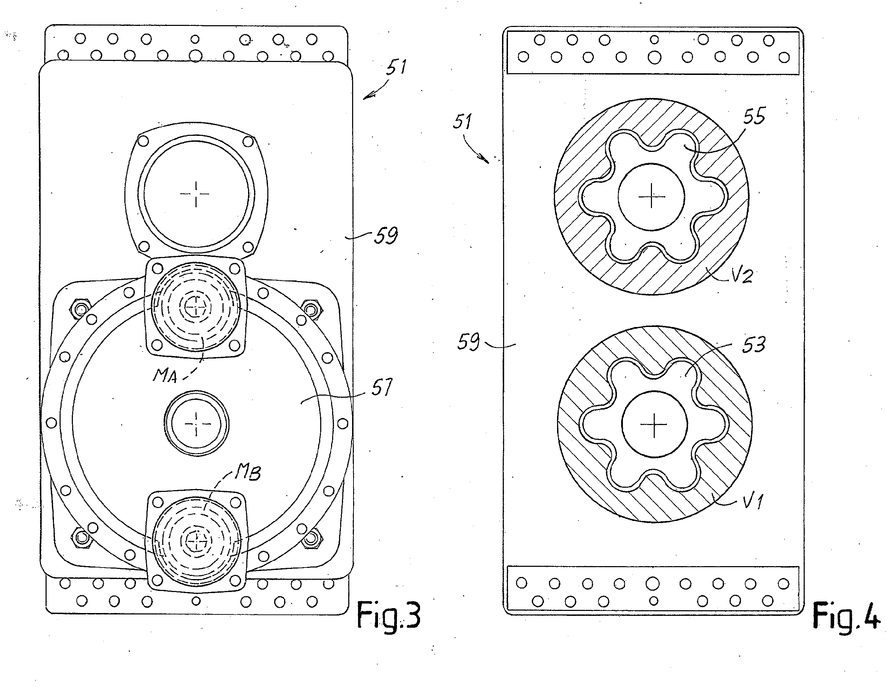

The reduction device according to the invention is shown in Figures 2 to 4. With particular reference to Figure 2, the device, indicated as a whole with 51, comprises two output shafts or driven shafts 53 and 55 with parallel axes, to which the two tools U1 and U2 of the crusher are torsionally coupled.

On the input side the device 51 has a flange 57, closing a case 59 in which the reduction gear trains are contained, immersed in an oil bath. The flange 57 has a bearing seat 61, in which the shank of a shaft 63 is supported. A crown gear or crown wheel 65 is keyed onto said shaft. The shaft 63 constitutes the output shaft of a first reducer or reduction stage indicated as a whole with 67, formed by an ordinary gear train, that is, a gear train in which the axes of the gear wheels or gears are fixed with respect to each other.

The reducer or reduction stage 67 has, in the example shown, two input shafts 69A, 69B which receive motion from two motors, for example two hydraulic motors, indicated with MA and MB, through the output shafts of said motors, indicated with 71A, 71 B. Torsionally coupled to the input shafts 69A, 69B are input gears 73A, 73B which, in this embodiment, are produced in one piece with the shafts 69A, 69B. The gears 73A, 73B both mesh with the central crown wheel or crown gear 65, so that the power transmitted to said wheel is given by the sum of the powers supplied by the two motors MA, MB.

The hub of the gear wheel 65 is splined and couples with an output shaft 75 which forms a gear 77 constituting the moving element of a reducer - or reduction stage - with planetary gear train, indicated as a whole with 79, disposed downstream from and in series with the reducer 67. Meshing with the gear 77 are one or more planet gears 81, supported by a planet carrier 83 and also meshing with a ring gear 85.

Torsionally coupled, through splined coupling, to the hub of the planet carrier 83, constituting the output element of the second reducer 79, is a gear 87, which forms the moving element of a further reducer or reduction stage with planetary gear train, indicated as a whole with 89. This reducer comprises one or more planets, indicated with 91, which mesh with the gear 87 and which are carried by a planet carrier 93. The planets 91 also mesh with a ring gear 97.

The planet carrier or train carrier 93 constitutes the output element of the third reducer 89 and coupled thereto, with a splined coupling 99, is the driven shaft 53. Keyed on said shaft is a gear wheel 101 which meshes with a gear wheel 103 with the same number of teeth, keyed on the second driven shaft 55 of the device 51.

With this arrangement the power supplied by the two motors MA, MB is transmitted to the toothed wheel 65 and through the reducers or reduction stages in series 67, 79, 89 is supplied to the driven shaft 53 and, through the pair of gear wheels 101, 103, to the driven shaft 55. The reduction ratio of the three reduction stages is calculated so as to obtain the overall transmission ratio required of the device, typically a ratio of around 100:1, it being understood that this ratio is purely indicative and non-limiting. As can be understood from the above description and drawings, the individual components of the three reduction stages may be of suitable dimensions for the power and torque required, without this influencing the distance between centers of the driven shafts 53, 55 and thereby of the tools U1, U2. The torque supplied by the crusher may be adequately increased without increasing the distance between centers of the tools.

Moreover, one or more motors may act on the input gear wheel 65. In the example in Figures 2 to 4 two motors M1, M2 are shown, although it must be understood that the motor may also be one or that more than two motors may be used. The number of motors is chosen as a function of the power required on the tools U1, U2, the overall output and the power of each motor, taking account of any need to guarantee a certain redundancy in the motorization. For example, it is possible to utilize three motors even if the overall power required is already delivered by just two motors in parallel. In this case, the presence of a third motor assures a degree of redundancy which allows the device to operate at the correct speed even if there is a fault in one of the three motors.

The use of an ordinary input gear train, constituted by the pair of gears 73A, 65 or 73B, 65, allows easy modification of the transmission ratio, simply by replacing the gears 73A, 73B, 65. This allows, for example, replacement of the motors MA, MB for which the device 51 was designed with others having a greater output at a different rotation speed to the design speed. In this case simple replacement of the gears 73A, 73B, 65 allows essentially the same output speed to be maintained on the shafts 53, 55.

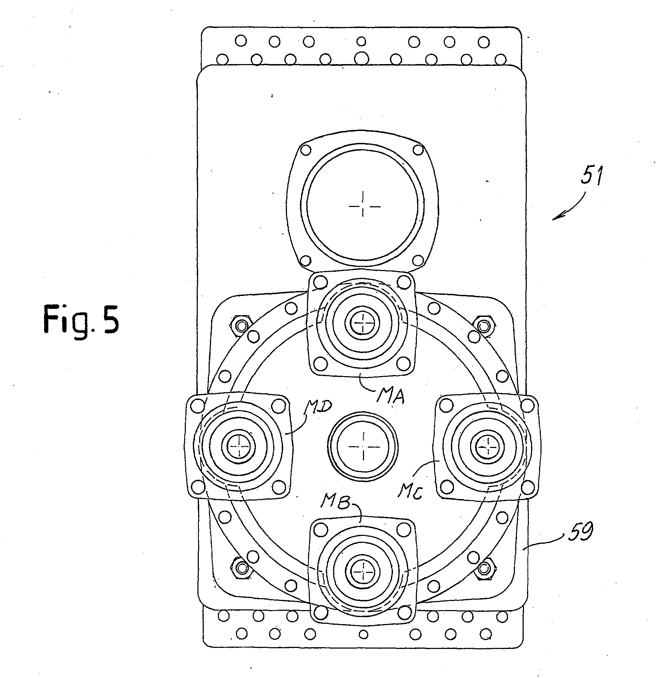

Figure 5 shows a front view of a modified device, provided with four motors, marked with MA, MB, MC, MD, instead of two motors as in the previous example.

It is understood that the number of reducers or reduction stages 67, 79, 89 may vary. For example, the intermediate stage 79 may be eliminated, or four reduction stages may be provided. This depends essentially on the total transmission ratio required, considering that a higher number of reduction stages requires a larger number of components and thereby an increase in cost.

The arrangement described allows an advantage to be obtained in terms of mechanical simplification of the device. Moreover, as mentioned, the arrangement allows the members of the various reduction stages to be increased in dimension to increase the input power, without modifying the distance between centers of the driven shafts and thereby of the tools of the crusher with which the device is associated.

It is understood that the drawing purely shows non-limiting practical embodiments of the invention, which may vary in forms and layouts without however departing from the scope of the concept on which the invention is based. Any reference numbers in the appended claims have the sole purpose of facilitating reading in the light of the description hereinbefore and of the accompanying drawings and do not limit the scope of protection whatsoever.

## Claims

1. A reduction device (51) for transmitting motion to a crusher, with a first and a second driven shaft (53, 55) parallel to each other and which can be coupled to crushing tools (U1, U2), **characterized by** a single power path through a cascade of reduction stages (67, 79, 89) disposed in series with one another between at least a power source (MA; MB; MC; MD) and the first driven shaft (53), while the second driven shaft (55) receives motion through a transmission (101; 103) from the driven shaft (51).

2. A reduction device (51) for transmitting motion to a crusher, with a first and a second driven shaft (53, 55) parallel to each other and which can be coupled to crushing tools (U1, U2), comprising an arrangement of reduction stages in series with one another (67; 79; 89), positioned between a coupling interface (69A, 69B) with at least one power source (MA; MB; MC; MD) and the driven shafts of the device; **characterized in that** motion is transmitted from the output of the last stage of the series of reduction stages to the first driven shaft (53); and **in that** a power transmission (101, 103) is provided from the first driven shaft (53) to the second driven shaft (55), the input torque to the first of said reduction stages in series being thereby transmitted to both the driven shafts.

3. Device as claimed in claim 1 or 2, comprising a first reduction stage (67) with at least an input shaft (69A; 69B) which can be coupled to a power source (MA; MB) and a further reduction stage (89) disposed downstream of said first reduction stage (67); wherein the output (93) of said further reduction stage (89) is torsionally coupled to the first driven shaft (53); and wherein a power transmission (101, 103) is disposed between the output (93) of said further reduction stage (89) and the second driven shaft (55), the second driven shaft (55) receiving the transmission torque through said first and said further reduction stage (67, 89) and said power transmission (101, 103).

4. Device as claimed in one or more of the previous claims, wherein said first reduction stage (67) comprises an ordinary gear train with at least one input gear (71A, 71 B) torsionally coupled to said input shaft (69A, 69B) and meshing with a crown gear (65) and wherein said further reduction stage (89) is a planetary gear unit.

5. Device as claimed in one or more of the previous claims, wherein said power transmission has a transmission ratio of 1:1, the two driven shafts (53, 55) rotating in opposite directions at the same angular velocity.

6. Device as claimed in at least claim 4, wherein said first reduction stage (69) comprises a plurality of input shafts (69A, 69B) each torsionally coupled to an input gear (71A; 71B), said input gears meshing with said crown gear (65), for connection to a corresponding plurality of power sources (MA, MB), which transfer power to said crown gear (65).

7. Device as claimed in one or more of the previous claims, comprising two reduction stages with planetary gear train (79, 89) in series with each other and with the first reduction stage (69).

8. Device as claimed in one or more of the previous claims, wherein each of said reduction stages with planetary gear train (89; 79) has a planet carrier (93; 83) constituting the output element of the gear train and a sun gear (87; 77) constituting the moving element of the gear train.

9. A crushing machine with a first crushing tool (U1) and a second crushing tool (U2), rotating about parallel axes, comprising a reduction and transmission device (51) as claimed in one or more of claims 1 to 8.
